# FASCICULE DE BREVET EUROPEEN

(11) **EP 3 420 416 B1**
(45) Date de publication et mention de la délivrance du brevet: **13.11.2019**
(21) Numéro de dépôt: 17700258.1
(22) Date de dépôt: 17.01.2017
(51) Int. Cl.: G04R 20/26, G04G 5/00

(54) **MÉTHODE DE RÉGLAGE AUTOMATIQUE D'UNE INFORMATION TEMPORELLE D'UNE MONTRE**
AUTOMATISCHE EINSTELLMETHODE DER STUNDENANZEIGE EINER ARMBANDUHR
METHOD FOR AUTOMATICALLY SETTING THE TIME OF A WATCH

(30) Priorité: 26.02.2016 EP 16157655
(43) Date de publication de la demande: 02.01.2019
(73) Titulaire: ETA SA Manufacture Horlogère Suisse, 2540 Grenchen (CH)
(72) Inventeur: LAGORGETTE, Pascal, 2502 Bienne (CH); BALLI, Fabien, 2502 Biel/Bienne (CH); BALMER, Raphaël, 2824 Vicques (CH); CHRISTE, Laurent, 2504 Bienne (CH); PETERS, Jean-Bernard, 2542 Pieterlen (CH)
(74) Mandataire: ICB SA
(86) Numéro de dépôt international: PCT/EP2017/050841
(87) Numéro de publication internationale: WO 2017/144196

(56) Documents cités:
- EP-A1- 2 458 458
- US-A1- 2005 105 401
- US-A1- 2005 151 849

## Description

La présente invention concerne une méthode de réglage d'une pièce d'horlogerie comprenant un boitier muni d'un bracelet dans lequel est agencé un microcontrôleur alimenté en électricité par une pile ou batterie, ledit microcontrôleur comprenant une base de temps et des zones mémoires et est utilisé afin d'envoyer des signaux de commande vers des moyens d'affichage pour afficher au moins une information temporelle. Par régler une pièce d'horlogerie, on entend régler une information temporelle donnée par la pièce d'horlogerie, par exemple l'heure, le quantième perpétuel, etc.

### ART ANTERIEUR

On distingue actuellement deux types de montres, les montres mécaniques ne comprenant aucun composant électronique et les montres dites électroniques fonctionnant avec une pile et un microcontrôleur. Or, les montres électroniques ont énormément évolué pour devenir de plus en plus des montres dites connectées. Ces montres connectées sont munies d'un module de communication utilisant un protocole NFC et/ou Bluetooth permettant l'échange de données avec un autre appareil du type téléphone mobile (aussi appelé smartphone) ou ordinateur portable ou tablette électronique. Cet échange de données permet actuellement le transfert de données d'un capteur situé dans la montre vers le téléphone mobile ou la tablette électronique, ces appareils possédant une puissance de calcul bien supérieure. Cet échange de données permet également l'envoi de données du type notification ou messagerie du téléphone vers la montre de sorte à prévenir l'utilisateur.

Ces montres électroniques peuvent utiliser, pour l'affichage des informations de temps comme l'heure ou la date, des moyens analogiques comme des aiguilles ou des disques ou des écrans électroniques utilisant les technologies LCD, LED ou OLED. Or, l'utilisation d'aiguilles ou de disques nécessitent l'utilisation d'au moins un moteur et de rouages de sorte que le réglage de l'heure se fait manuellement pouvant entraîner des imprécisions et des décalages.

Le document US2005/105401 A1 divulgue une méthode selon le préambule de la revendication 1.

En particulier, dans le mode de réalisation de la figure 13 de ce document, on utilise un objet portable muni d'un écran, d'une caméra et d'un module de communication, pour tester l'exactitude de l'information temporelle affichée par une pièce d'horlogerie. Pour ce faire, l'objet portable utilise la caméra pour détecter une image qui représente la position des aiguilles de la montre.

L'information temporelle affichée par la montre est donc déterminée et comparée avec une information temporelle disponible dans l'objet portable et considérée plus fiable que celle de la montre. Si l'objet portable détecte une différence entre les deux informations temporelles, il envoie à la montre, via une communication optique, l'information temporelle fiable, qui sera donc affichée par la montre.

### RESUME DE L'INVENTION

La présente invention a pour but de pallier aux inconvénients de l'art antérieur en proposant une méthode pour régler une information temporelle sur une montre par l'intermédiaire d'un autre appareil qui soit simple et fiable.

A cet effet, l'invention concerne une méthode de réglage telle que définie dans la revendication indépendante 1.

Un avantage de cette méthode est de permettre un réglage automatique de la pièce d'horlogerie puisque le procédé consiste à détecter un décalage entre l'information temporelle affichée et une information temporelle fiable venant d'une source externe et à envoyer une commande de correction pour afficher l'information temporelle juste.

Le récepteur de la montre est au moins un phototransistor. S'il détecte du noir, le phototransistor génère un signal électrique correspondant à un niveau logique bas, et s'il détecte du blanc, le phototransistor génère un signal correspondant à un niveau logique haut, ou inversement.

Dans un mode de réalisation avantageux, la zone définie sur l'écran de l'objet portable est divisée en une première et une seconde portion, chaque portion affichant séquentiellement et indépendamment de l'autre portion du noir ou du blanc lors de la sous-étape d'affichage, la pièce d'horlogerie comprenant deux phototransistors agencés au niveau du boitier, le premier phototransistor étant agencé de sorte à détecter la séquence de la première portion, le second phototransistor étant agencé de sorte à détecter la séquence de la seconde portion.

Avantageusement, la séquence de noir et blanc de la première portion correspond à un codage lumineux de l'information temporelle, et la séquence de noir et blanc de la seconde portion correspond à un signal d'horloge permettant une transmission synchrone entre l'objet portable et la pièce d'horlogerie.

Dans un mode de réalisation avantageux, la zone définie sur l'écran de l'objet portable est divisée en une première, une seconde et une troisième portion telles que la première et la seconde portion sont séparées physiquement par la troisième portion, chaque portion affichant séquentiellement et indépendamment des autres portions du noir ou du blanc lors de la sous-étape d'affichage, la pièce d'horlogerie comprenant deux phototransistors agencés au niveau du boitier, le premier phototransistor étant agencé de sorte à détecter la séquence de la première portion, le second phototransistor étant agencé de sorte à détecter la séquence de la seconde portion.

Avantageusement, la séquence de noir et blanc de la première portion correspond à un codage lumineux de l'information temporelle, et la séquence de noir et blanc de la seconde portion correspond à un signal d'horloge permettant une transmission synchrone. Sur la troisième portion, agencée entre la première et la seconde portion, rien n'est affiché, ce qui permet d'éviter les interférences optiques entre la première et la seconde portion.

Dans un mode de réalisation avantageux, l'étape de test de l'exactitude de l'information temporelle affichée consiste à :
- prendre, à un instant donné, une image des moyens d'affichage de la pièce d'horlogerie et une image d'une information temporelle d'une source externe
- traiter l'image des moyens d'affichage de la pièce d'horlogerie en comparant la position des moyens d'affichage par rapport à une série de repères pour détecter l'information temporelle affichée
- comparer l'information temporelle détectée avec l'image de l'information temporelle de la source externe.

Dans un mode de réalisation avantageux, l'étape de vérification que l'information correcte est affichée consiste à :
- prendre, à un instant donné, une image des moyens d'affichage de la pièce d'horlogerie et une image d'une information temporelle d'une source externe
- traiter l'image des moyens d'affichage de la pièce d'horlogerie en comparant la position des moyens d'affichage par rapport à une série de repères pour détecter l'information temporelle affichée
- comparer l'information temporelle détectée avec l'image de l'information temporelle de la source externe.

Dans un autre mode de réalisation, la méthode comprend en outre une étape préliminaire de calibration de la pièce d'horlogerie consistant à :
- envoyer à la montre, via le circuit de communication une commande pour afficher une information temporelle définie
- envoyer une commande aux moyens d'affichage par le microcontrôleur afin que les moyens d'affichage puissent afficher ladite information temporelle définie.

Dans un mode de réalisation avantageux, l'objet portable est un smartphone ou une tablette tactile.

### BREVE DESCRIPTION DES FIGURES

Les buts, avantages et caractéristiques de l'invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement l'ensemble selon l'invention
- Les figures 2, 3a, 3b représentent la méthode de réglage d'une pièce d'horlogerie
- Les figures 4a et 4b représentent un mode de transmission asynchrone pour l'envoi de données vers la pièce d'horlogerie
- Les figures 5 à 7 représentent un mode de transmission synchrone vers la pièce d'horlogerie.

### DESCRIPTION DETAILLEE

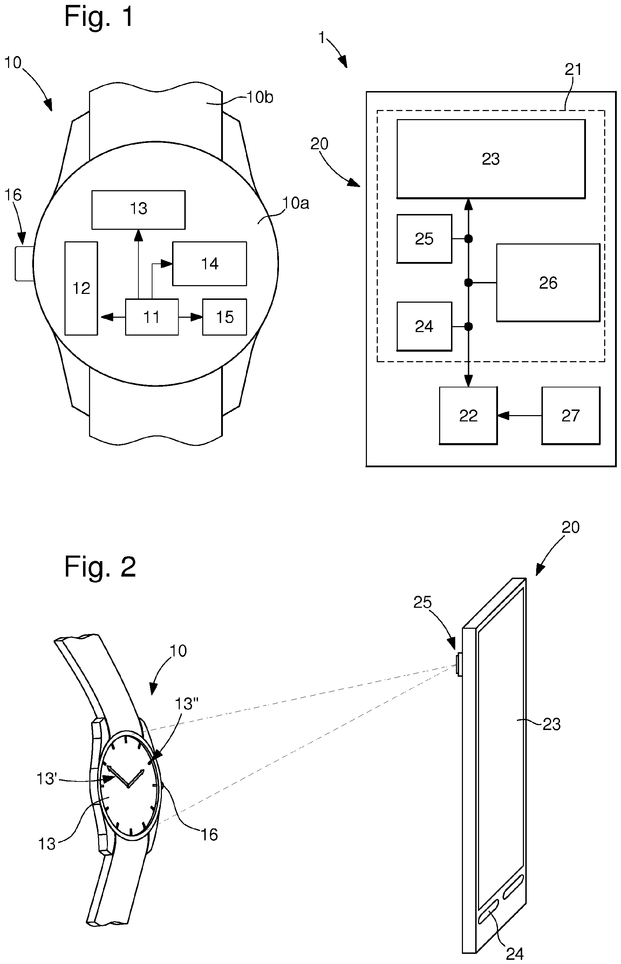

Sur la figure 1, un ensemble 1 selon l'invention est représenté. Un tel ensemble 1 comprend au moins une montre 10 et un appareil électronique portable 20 comme un téléphone mobile ou une tablette électronique.

La montre 10 comprend un boîtier 10a muni d'un bracelet 10b. Dans ce boîtier, un microcontrôleur 11 alimenté en électricité par une unité d'alimentation 12 comme une pile ou une batterie est agencé, ledit microcontrôleur 11 comprenant une base de temps et des zones mémoires. Ce microcontrôleur 11 est utilisé afin d'envoyer des signaux de commande vers des moyens d'affichage 13, ces moyens d'affichage 13 pouvant comprendre des aiguilles 13' ou des disques. Ces moyens d'affichage permettent l'affichage d'une information temporelle comme l'heure, la date, le quantième ou la phase de la lune. Le microcontrôleur 11 est connecté également avec des moyens de commande 16 pouvant être une couronne, des poussoirs ou des moyens tactiles et une unité de communication 14 utilisant un protocole du type Bluetooth ou NFC. Le microcontrôleur 11 peut également communiquer avec un capteur 15.

L'appareil électronique portable 20 comprend un boîtier dans lequel un circuit électronique 21 est agencé. Ce circuit électronique 21 porte le microcontrôleur ou processeur 22, le module d'affichage 23, les moyens de commande 24, un capteur optique faisant office de caméra ou d'appareil photo 25 et un module de communication 26, le tout étant alimenté par une batterie 27.

La présente invention cherche alors à fournir un procédé permettant le réglage d'au moins une information temporelle via l'appareil électronique portable. Pour cela, la première étape consiste à détecter la présence d'un décalage temporel entre l'information affichée par la montre 10 et une source fiable. Pour cela, cette première étape consiste à utiliser la caméra 25 pour prendre une photographie des moyens d'affichage 13 de la montre. Cette photographie est utilisée par un programme de traitement. Ce programme de traitement analyse la position des moyens d'affichage 13 par rapport à des repères du cadran. Dans le cas où les moyens d'affichage 13 sont des aiguilles 13', les repères sont les index 13" du cadran 13"' comme visible à la figure 2.

Pour cela, il est nécessaire que l'incrément de positionnement des aiguilles soit suffisamment grand pour ne pas avoir des problèmes de parallaxe. Plus il y aura d'aiguilles 13' sur le mouvement électronique et plus la distance entre chaque aiguille 13' et le cadran 13"' sera grande, plus le risque de voir apparaitre des problèmes de parallaxe est grand. Il faudra donc adapter le pas de l'aiguille 13' en fonction de la distance aiguille/cadran.

Le programme de traitement va prendre référence sur les index 13". Elle va également vérifier l'ellipse formée par le cadran 13'", la glace ou la lunette afin d'évaluer la parallaxe. Si l'ellipse est trop « écrasée », cela signifie qu'on aura une erreur de parallaxe trop importante. Dans le cas idéal, l'application ou le programme de traitement devrait voir un cercle.

Une fois l'indication temporelle des moyens d'affichage 13 déterminée, le programme de traitement compare l'information temporelle détectée à une source temporelle. Cette source temporelle peut provenir de la base de temps interne de l'appareil électronique portable 20 ou d'une source externe. Cette source externe peut être un signal radiofréquence ou provenir d'un réseau du type internet. Préférentiellement, une photographie de la source temporelle est effectuée en même temps que la photographie des moyens d'affichage 13 de sorte que l'information temporelle détectée soit comparée à la source fiable, le tout au même instant.

Si le programme de traitement détecte une anomalie, c'est-à-dire une différence entre l'information temporelle affichée et la source utilisée, une opération de réglage est réalisée.

Une deuxième étape consiste à envoyer une information temporelle correcte à la montre 10. Cette information temporelle est envoyée via une modulation optique depuis l'appareil électronique portable 20 vers la montre 10 qui comprend un moyen récepteur. Pour cela, le capteur 15 fait office de moyen récepteur et est un capteur optique ou phototransistor 15' capable de détecter un flux lumineux et de le transformer en signal électrique.

Ce phototransistor 15' est avantageusement situé sous le cadran 13"', celui-ci présentant une ouverture ou une portion transparente ou est réalisé dans un matériau partiellement transparent. Bien entendu, ce photorécepteur pourra être agencé sur le fond de la boîte ou au niveau de la tranche de cette boîte.

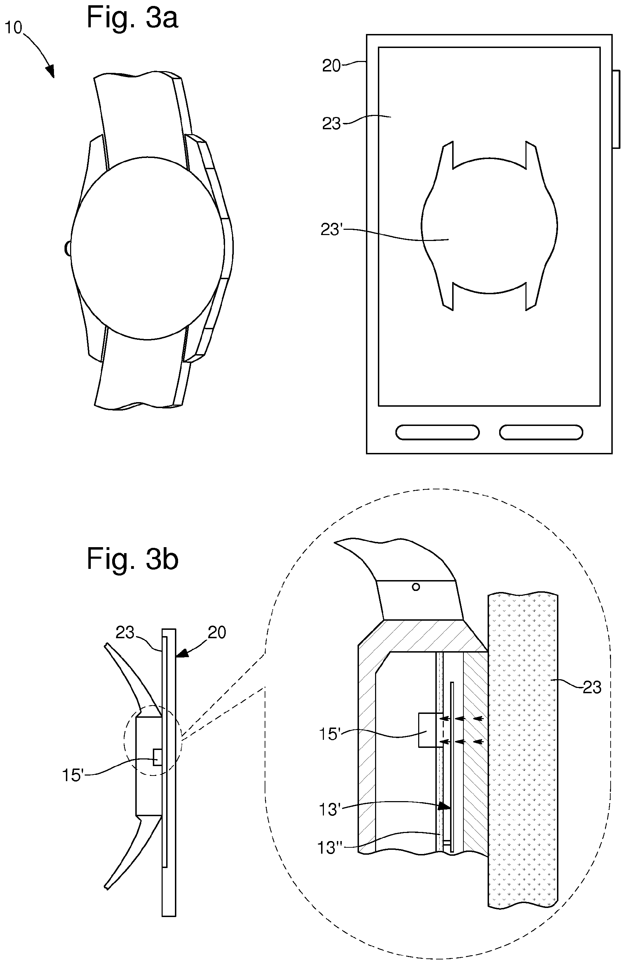

Pour produire un signal lumineux, le procédé utilise avantageusement l'écran d'affichage 23 de l'appareil électronique portable 20. L'utilisation de cet écran permet astucieusement d'afficher, sur la surface de l'écran 23, une zone 23' dont la forme et la surface sont sensiblement identiques à la forme et aux dimensions de la zone au niveau de laquelle le photorécepteur est agencé. On comprend par-là que dans le cas où le photorécepteur est agencé au niveau du cadran, la zone 23' aura la forme et la surface sensiblement identiques ou similaires à celles du cadran 13'" de la montre 10. De cette façon, l'utilisateur peut plaquer la montre 10 sur la zone 23' de l'écran de l'appareil électronique portable 20 de sorte que le cadran 13'" soit en regard de ladite zone 23'. Cette zone spécifique 23' sera la zone par laquelle la modulation optique sera opérée comme visible aux figures 3a et 3b. Cette configuration permet d'être certain que la lumière captée par le phototransistor 15' sera la lumière générée par ledit écran d'affichage 23 et permet d'éviter les pertes de luminosité étant donné que la montre est plaquée sur l'écran d'affichage 23.

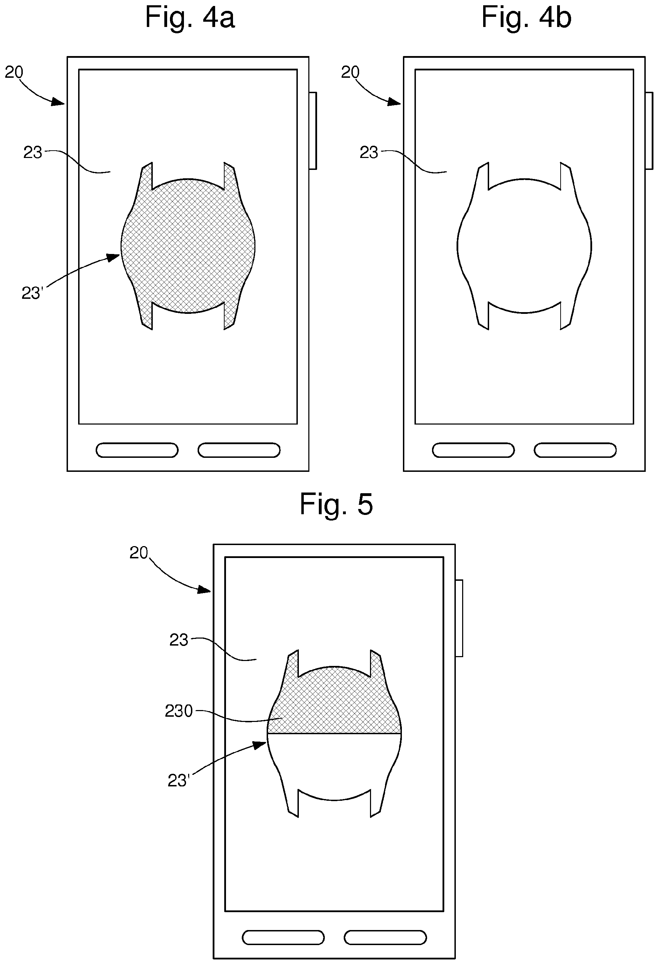

Pour transmettre une information, la modulation optique est utilisée, celle-ci pouvant être asynchrone. Pour cette transmission optique asynchrone, la zone 23' de l'écran 23, dont la forme et la surface sont sensiblement identiques à la forme et aux dimensions du cadran 13'" de la montre 10, est commandée pour afficher soit du noir signifiant un '0' logique soit une lumière blanche signifiant un '1' logique, ou inversement, le tout formant une information binaire comme visible aux figures 4a et 4b.

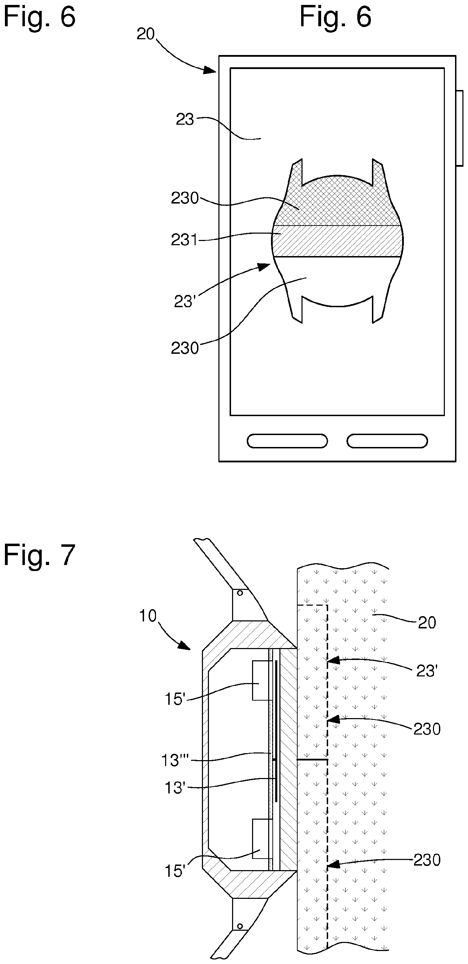

Dans une variante, il peut être prévu de faire de la transmission de données de type synchrone comme visible aux figures 5 à 7. Pour cela, la montre 10 doit être munie de deux phototransistors 15'. Idéalement, ils seront agencés de façon diamétralement opposée afin d'être éloignés l'un de l'autre. En effet, le principe d'une transmission optique synchrone consiste à avoir une transmission d'un signal d'horloge et la transmission d'un signal de données codant l'information temporelle à transmettre. La zone 23' de l'écran d'affichage 23 dont la forme et la surface sont sensiblement identiques à la forme et aux dimensions du cadran de la montre est alors divisée en au moins deux parties 230, chaque partie 230 permettant l'envoi d'un signal d'horloge ou de données aux phototransistors 15'. La transmission synchrone se caractérise par le fait que l'émetteur et le récepteur cadencés avec la même horloge. Le récepteur reçoit de façon continue (même lorsque aucun bit n'est transmis) les informations au rythme où l'émetteur les envoie. Chaque partie 230 de l'écran 23 devient alors blanche ou noire afin d'envoyer un '0' logique ou un '1' logique.

Astucieusement, il pourra être prévu que la zone 23' de l'écran d'affichage dont la forme et la surface sont sensiblement identiques à la forme et aux dimension du cadran 13"' de la montre soit divisée en trois parties avec deux zones dites actives 230, celles-ci devenant alors blanches ou noires afin d'envoyer un '0' logique ou un '1' logique. Une troisième zone dite passive 231 est située entre les deux zones actives 230. Cette zone passive 231 sert de zone morte afin d'éviter les interférences optiques entres les deux zones actives 230. En effet, en cas d'alignement imparfait, cette zone morte 231 fait office de tampon pour éviter que les zones actives envoient un signal optique vers le phototransistor qui ne leur est pas dédié.

Bien entendu, l'invention n'est pas limitée au mode de réalisation présenté de sorte qu'en cas de transmission optique, le ou les phototransistors peuvent être agencés au niveau de la carrure ou du fond de la montre.

Une fois que les données sont transmisses à la montre, le microcontrôleur 11 de celle-ci envoie des commandes aux moyens d'affichage afin qu'ils puissent afficher une information correcte. Dans le cas d'aiguilles, le microcontrôleur 11 envoie une commande pour activer les moteurs et déplacer les aiguilles.

Dans une troisième étape, l'objectif est de vérifier que la correction a bien été faite. Pour cela, cette étape consiste à utiliser la caméra 25 pour prendre une photographie des moyens d'affichage 13. Cette photographie est alors utilisée par un programme de traitement. Ce programme de traitement analyse la position des moyens d'affichage par rapport à des repères et va comparer l'information temporelle par rapport à une source fiable.

Dans une variante de cette troisième étape, la vérification pourra être faite par transfert de données via une transmission sans fil de type Bluetooth, la montre 10 envoyant les données de l'information temporelle qu'elle affiche.

Dans une première variante, il est prévu une étape préliminaire. Cette étape préliminaire consiste en une étape de calibration de la détection des aiguilles. En effet, selon les conditions de luminosité, il est possible qu'il y ait des jeux d'ombres ou de reflets qui peuvent entraîner une mauvaise détection de l'information temporelle. Cette étape de calibration consiste donc à envoyer, de l'appareil électronique portable, vers la montre 10, via leur circuit de communication 14, 26, une commande pour afficher une information temporelle définie à afficher comme par exemple 10h10. Suite à la réception de cette commande, le microcontrôleur 11 envoie une commande aux moyens d'affichage 13 afin que ceux-ci puissent afficher ladite information temporelle définie.

Une fois cette information affichée, le processus de détection est enclenché de sorte que l'objet portable électronique 20 utilise sa caméra 25 pour détecter l'information temporelle affichée. Si l'information temporelle détectée est égale à l'information temporelle définie alors aucune autre action n'est faite et la montre peut afficher de nouveau une information temporelle actuelle. Par contre, si l'information temporelle détectée n'est pas égale à l'information temporelle définie alors une correction est opérée. Cette correction peut se présenter sous la forme d'un offset c'est-à-dire d'une valeur à ajouter pour obtenir la valeur correcte. Cette correction peut être suivie par une autre phase de test consistant à détecter de nouveau l'information temporelle affichée et voir si la correction a été prise en compte.

Il pourra être également prévu dans cette variante que la synchronisation des moyens d'affichage 13 comme les aiguilles soit faite. Pour cela, l'information temporelle définie est portée à la connaissance de l'utilisateur via les moyens d'affichage de l'objet portable électronique. Cette information temporelle définie est envoyée à la montre afin que celle-ci l'affiche avec ses moyens d'affichage. Il est alors aisé pour l'utilisateur de vérifier que l'information temporelle définie est correcte et de modifier cette affichage en cas de constatation de décalages. Préférentiellement, cette synchronisation des aiguilles est réalisée antérieurement à la calibration de la détection des aiguilles.

Dans une seconde variante de réalisation, la montre est équipée d'une cellule solaire afin d'assurer une fourniture d'énergie pour recharger une batterie ou accumulateur. Astucieusement, cette cellule solaire est utilisée comme photorécepteur lors de la transmission d'informations. En effet, dans une cellule solaire, il existe une relation de proportionnalité entre le flux de lumière capté par la cellule solaire et le courant produit qu'elle produit (courant de charge). Le courant produit/converti par la cellule solaire peut être mesuré, par exemple en court-circuitant la cellule solaire via une résistance shunt. Ce courant donne une image du flux de lumière passant dans la cellule solaire.

La relation entre le flux de lumière capté et le courant signifie qu'en modulant la taille de la surface active de la zone émettrice du smartphone, pour une intensité lumineuse fixe, il est possible de moduler le courant converti/produit par la cellule solaire. A partir de cela, il est possible d'effectuer une transmission ternaire et non plus uniquement binaire, en utilisant un seul récepteur optique. Le fait d'avoir plusieurs niveaux de courant permet d'utiliser des codages plus complexes et donc plus sûrs. Par exemple, un codage du type Manchester.

Un premier avantage est de pouvoir combiner le signal d'horloge à celui des données, permettant une transmission synchrone plus fiable qu'une transmission asynchrone.

Le second avantage est d'utiliser la cellule solaire comme source d'énergie et en alternance comme récepteur de données.

Un troisième avantage est que la transmission optique devient indépendante de l'intensité lumineuse de l'émetteur, pour autant que celle-ci soit stable pendant la transmission. En effet, la modulation d'amplitude se fait en réduisant ou augmentant la surface active, ce qui permet facilement de s'adapter d'un smartphone à un autre, dont les réglages de l'intensité lumineuse diffèrent de l'un à l'autre.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Ainsi, il sera possible de régler la totalité des informations temporelles d'une montre 10. En effet, il est connu des montres affichant l'heure mais aussi la date, le mois et le jour ainsi que l'année bissextile ou non. De ce fait, lors d'une période prolongée d'inactivité ou lors de la révision, la présente invention permet le réglage ou la mise à jour de toutes les informations temporelles délivrées par la montre, en une seule fois.

## Revendications

1. Méthode de réglage d'une pièce d'horlogerie (10) comprenant un boitier (10a) muni d'un bracelet (10b) dans lequel est agencé un microcontrôleur (11) alimenté en électricité par une pile ou batterie (12), ledit microcontrôleur (11) comprenant une base de temps et des zones mémoires et est utilisé afin d'envoyer des signaux de commande vers des moyens d'affichage (13) pour afficher au moins une information temporelle, ladite méthode comprenant les étapes suivantes :
• se munir d'un objet portable (20) comprenant un écran (23) et un boitier dans lequel se trouve un circuit électronique (21) comportant un microcontrôleur (22), un module d'affichage (23), des moyens de commande (24), une caméra (25) et un module de communication (26), le circuit électronique étant alimenté par une batterie (27)
• tester l'exactitude d'une information temporelle affichée par ladite pièce d'horlogerie (10) en utilisant la caméra (25) de l'objet portable (20) pour la comparer à une information temporelle disponible dans l'objet portable (20) et provenant d'une source externe
• envoyer l'information temporelle de l'objet portable (20) à la pièce d'horlogerie (10) si une différence est détectée, la pièce d'horlogerie (10) comprenant au moins un phototransistor (15') agencé au niveau du boitier (10a) pour recevoir cette information temporelle, la pièce d'horlogerie (10) étant agencée pour agir sur ses moyens d'affichage (13) pour afficher cette information temporelle correcte
• vérifier que l'information correcte est affichée,
**caractérisée en ce que** l'étape d'envoi de l'information temporelle comprend les sous-étapes suivantes :
• définir sur l'écran (23) de l'objet portable (20) une zone (23') de forme et dimensions similaires au boitier (10a) de la pièce d'horlogerie (10)
• plaquer le boitier (10a) de la pièce d'horlogerie (10) sur ladite zone (23')
• afficher séquentiellement du noir ou du blanc sur la totalité de ladite zone (23') ou la totalité d'une portion (230) de ladite zone (23'), selon une séquence de noir et blanc correspondant à un codage lumineux de l'information temporelle à envoyer de l'objet portable (20) à la pièce d'horlogerie (10).

2. Méthode de réglage selon la revendication 1, dans laquelle la zone (23') définie sur l'écran (23) de l'objet portable (20) est divisée en une première et une seconde portion (23'), chaque portion affichant séquentiellement et indépendamment de l'autre portion du noir ou du blanc lors de la sous-étape d'affichage, la pièce d'horlogerie (10) comprenant deux phototransistors (15') agencés au niveau du boitier (10a), le premier phototransistor étant agencé de sorte à détecter la séquence de la première portion, le second phototransistor étant agencé de sorte à détecter la séquence de la seconde portion.

3. Méthode de réglage selon la revendication 2, dans laquelle la séquence de noir et blanc de la première portion correspond à un codage lumineux de l'information temporelle, et la séquence de noir et blanc de la seconde portion correspond à un signal d'horloge permettant une transmission synchrone entre l'objet portable (20) et la pièce d'horlogerie (10).

4. Méthode de réglage selon la revendication 1, dans laquelle la zone (23') définie sur l'écran (23) de l'objet portable (20) est divisée en une première, une seconde et une troisième portion (230, 231) telles que la première et la seconde portion (230) sont séparées physiquement par la troisième portion (231), chaque portion affichant séquentiellement et indépendamment des autres portions du noir ou du blanc lors de la sous-étape d'affichage, la pièce d'horlogerie (10) comprenant deux phototransistors (15') agencés au niveau du boitier (10a), le premier phototransistor étant agencé de sorte à détecter la séquence de la première portion, le second phototransistor étant agencé de sorte à détecter la séquence de la seconde portion.

5. Méthode de réglage selon la revendication 4, dans laquelle la séquence de noir et blanc de la première portion correspond à un codage lumineux de l'information temporelle, et la séquence de noir et blanc de la seconde portion correspond à un signal d'horloge permettant une transmission synchrone.

6. Méthode de réglage selon l'une des revendications précédentes, dans laquelle l'étape de test de l'exactitude de l'information temporelle affichée comprend les sous-étapes suivantes :
• prendre, à un instant donné, une image des moyens d'affichage de la pièce d'horlogerie et une image d'une information temporelle d'une source externe
• traiter l'image des moyens d'affichage de la pièce d'horlogerie en comparant la position des moyens d'affichage par rapport à une série de repères pour détecter l'information temporelle affichée
• comparer l'information temporelle détectée avec l'image de l'information temporelle de la source externe.

7. Méthode de réglage selon l'une des revendications précédentes, dans laquelle l'étape de vérification que l'information correcte est affichée comprend les sous-étapes suivantes :
• prendre, à un instant donné, une image des moyens d'affichage de la pièce d'horlogerie et une image d'une information temporelle d'une source externe
• traiter l'image des moyens d'affichage de la pièce d'horlogerie en comparant la position des moyens d'affichage par rapport à une série de repères pour détecter l'information temporelle affichée
• comparer l'information temporelle détectée avec l'image de l'information temporelle de la source externe.

8. Dans un autre mode de réalisation, la méthode comprend en outre une étape préliminaire de calibration de la pièce d'horlogerie comprenant les sous-étapes suivantes :
• envoyer à la montre, via le circuit de communication une commande pour afficher une information temporelle définie
• envoyer une commande aux moyens d'affichage par le microcontrôleur afin que les moyens d'affichage puissent afficher ladite information temporelle définie.

9. Méthode de réglage selon l'une des revendications précédentes, dans laquelle l'objet portable est un smartphone ou une tablette tactile.

## Patentansprüche

1. Verfahren zum Einstellen einer Uhr (10), umfassend ein Gehäuse (10a), das mit einem Armband (10b) versehen ist, in dem ein Mikrocontroller (11) angeordnet ist, der von einem elektrischen Element oder einer Batterie (12) mit Strom versorgt wird, wobei der Mikrocontroller (11) eine Zeitbasis und Speicherbereiche umfasst und verwendet wird, um Steuersignale zum Anzeigen mindestens einer Zeitinformation an eine Anzeigeeinrichtung (13) zu senden, wobei das Verfahren die folgenden Schritte umfasst:
- Bereitstellen eines tragbaren Gegenstands (20), umfassend einen Bildschirm (23) und ein Gehäuse, in dem sich eine elektronische Schaltung (21) befindet, die einen Mikrocontroller (22), ein Anzeigemodul (23), Steuermittel (24), eine Kamera (25) und ein Kommunikationsmodul (26) umfasst, wobei die elektronische Schaltung von einer Batterie (27) versorgt wird,
- Prüfen der Genauigkeit einer von der Uhr (10) angezeigten Zeitinformation unter Verwendung der Kamera (25) des tragbaren Gegenstands (20), um sie mit einer Zeitinformation zu vergleichen, die in dem tragbaren Gegenstand (20) verfügbar ist und von einer externen Quelle stammt,
- Senden der Zeitinformation vom tragbaren Gegenstand (20) an die Uhr (10), falls ein Unterschied detektiert wird, wobei die Uhr (10) mindestens einen Fototransistor (15') umfasst, der in Bezug auf das Gehäuse (10a) angeordnet ist, um diese Zeitinformation zu empfangen, und die Uhr (10) dafür ausgelegt ist, auf ihre Anzeigeeinrichtung (13) einzuwirken, um diese korrekte Zeitinformation anzuzeigen,
- Verifizieren, dass die korrekte Information angezeigt wird,
**dadurch gekennzeichnet, dass** der Schritt zum Senden der Zeitinformation die folgenden Teilschritte umfasst:
- Definieren eines Bereichs (23') auf dem Bildschirm (23) des tragbaren Gegenstands (20) mit einer Form und mit Abmessungen, die zu jenen des Gehäuses (10a) der Uhr (10) ähnlich sind,
- In volle Deckung bringen des Gehäuses (10a) der Uhr (10) mit diesem Bereich (23'),
- nacheinander Anzeigen von Schwarz und von Weiß auf dem gesamten Bereich (23') oder auf einem gesamten Abschnitt (230) des Bereichs (23') gemäß einer Folge von Schwarz und Weiß entsprechend einer von dem tragbaren Gegenstand (20) an die Uhr (10) zu sendenden Lichtcodierung der Zeitinformation.

2. Einstellverfahren nach Anspruch 1, wobei der auf dem Bildschirm (23) des tragbaren Gegenstands (20) definierte Bereich (23') in einen ersten und einen zweiten Abschnitt (23') unterteilt ist, in dem Anzeigeteilschritt jeder Abschnitt nacheinander und unabhängig von dem anderen Abschnitt Schwarz oder Weiß anzeigt, die Uhr (10) zwei Fototransistoren (15') umfasst, die in Bezug auf das Gehäuse (10a) angeordnet sind, und der erste Fototransistor dazu vorgesehen ist, die Folge des ersten Abschnitts zu detektieren, und der zweite Fototransistor dazu vorgesehen ist, die Folge des zweiten Abschnitts zu detektieren.

3. Einstellverfahren nach Anspruch 2, wobei die Folge aus Schwarz und Weiß des ersten Abschnitts einer Lichtcodierung der Zeitinformation entspricht und die Folge aus Schwarz und Weiß des zweiten Abschnitts einem Taktsignal entspricht, das eine synchrone Übertragung zwischen dem tragbaren Gegenstand (20) und der Uhr (10) ermöglicht.

4. Einstellverfahren nach Anspruch 1, wobei der auf dem Bildschirm (23) des tragbaren Gegenstands (20) definierte Bereich (23') in einen ersten, einen zweiten und einen dritten Abschnitt (230, 231) unterteilt ist, derart, dass der erste und der zweite Abschnitt (230) durch den dritten Abschnitt (231) physisch getrennt sind, wobei in dem Anzeigeteilschritt jeder Abschnitt nacheinander und unabhängig von den anderen Abschnitten Schwarz oder Weiß anzeigt, die Uhr (10) zwei Fototransistoren (15') umfasst, die in Bezug auf das Gehäuse (10a) angeordnet sind, und der erste Fototransistor dazu vorgesehen ist, die Folge des ersten Abschnitts zu detektieren, und der zweite Fototransistor zu vorgesehen ist, die Folge des zweiten Abschnitts zu detektieren.

5. Einstellverfahren nach Anspruch 4, wobei die Folge aus Schwarz und Weiß des ersten Abschnitts einer Lichtcodierung der Zeitinformation entspricht und die Folge aus Schwarz und Weiß des zweiten Abschnitts einem Taktsignal entspricht, das eine synchrone Übertragung ermöglicht.

6. Einstellverfahren nach einem der vorhergehenden Ansprüche, wobei der Schritt zum Prüfen der Genauigkeit der angezeigten Zeitinformation die folgenden Teilschritte umfasst:
- Aufnehmen eines Bildes der Anzeigeeinrichtung der Uhr und eines Bildes einer Zeitinformation einer externen Quelle zu einem bestimmten Zeitpunkt,
- Verarbeiten des Bildes der Anzeigeeinrichtung der Uhr durch Vergleichen der Position der Anzeigeeinrichtung in Bezug auf eine Reihe von zu erfassenden Objekten, um die angezeigte Zeitinformation zu detektieren,
- Vergleichen der detektieren Zeitinformation mit dem Bild der Zeitinformation der externen Quelle.

7. Einstellverfahren nach einem der vorhergehenden Ansprüche, wobei der Schritt zum Verifizieren, ob die korrekte Information angezeigt wird, die folgenden Teilschritte umfasst:
- Aufnehmen eines Bildes der Anzeigeeinrichtung der Uhr und eines Bildes einer Zeitinformation einer externen Quelle zu einem bestimmten Zeitpunkt,
- Verarbeiten des Bildes der Anzeigeeinrichtung der Uhr durch Vergleichen der Position der Anzeigeeinrichtung in Bezug auf eine Reihe von zu erfassenden Objekten, um die angezeigte Zeitinformation zu detektieren,
- Vergleichen der detektieren Zeitinformation mit dem Bild der Zeitinformation der externen Quelle.

8. Verfahren, das in einer anderen Ausführungsform ferner einen vorhergehenden Schritt zum Kalibrieren der Uhr umfasst, umfassend die folgenden Teilschritte:
- Senden eines Befehls zum Anzeigen einer bestimmten Zeitinformation über die Kommunikationsschaltung an die tragbare Uhr,
- Senden eines Befehls durch den Mikrocontroller an die Anzeigeeinrichtung, damit die Anzeigeeinrichtung die definierte Zeitinformation anzeigen kann.

9. Einstellverfahren nach einem der vorhergehenden Ansprüche, wobei der tragbare Gegenstand ein Smartphone oder ein Touchpad ist.

## Claims

1. A method for adjusting a timepiece (10) comprising a case (10a), provided with a bracelet (10b), in which a microcontroller (11) powered by a cell or battery (12) is arranged, said microcontroller (11) comprising a time base and memory areas and being used to send control signals to display means (13) for displaying at least one piece of time information, said method comprising the following steps:
• providing a portable object (20) comprising a screen (23) and a case in which there is an electronic circuit (21) comprising a microcontroller (22), a display module (23), control means (24), a camera (25) and a communication module (26), the electronic circuit being powered by a battery (27);
• testing the accuracy of a piece of time information displayed by said timepiece (10) by using the camera (25) of the portable object (20) to compare it with a piece of time information available in the portable object (20) and obtained from an external source;
• sending the time information from the portable object (20) to the timepiece (10) if a difference is detected, the timepiece (10) comprising at least one phototransistor (15') arranged at the case (10a) for receiving this time information, the timepiece (10) being arranged to operate its display means (13) to display this correct time information;
• checking that the correct information is displayed,
**characterized in that** the step of sending the time information comprises the following sub-steps:
- defining, on the screen (23) of the portable object (20), an area (23') whose shape and dimensions are similar to those of the case (10a) of the timepiece (10);
- pressing the case (10a) of the timepiece (10) against said area (23');
- sequentially displaying black or white over the entirety of said area (23') or over the entirety of a portion (230) of said area (23'), according to a black and white sequence corresponding to a light coding of the time information to be sent from the portable object (20) to the timepiece (10).

2. The adjustment method as claimed in claim 1, wherein the area (23') defined on the screen (23) of the portable object (20) is divided into a first and a second portion (23'), each portion sequentially displaying, independently from the other portion, black or white during the display sub-step, the timepiece (10) comprising two phototransistors (15') arranged at the case (10a), the first phototransistor being arranged so as to detect the sequence of the first portion, the second phototransistor being arranged so as to detect the sequence of the second portion.

3. The adjustment method as claimed in claim 2, wherein the black and white sequence of the first portion corresponds to a light coding of the time information, and the black and white sequence of the second portion corresponds to a clock signal allowing synchronous transmission between the portable object (20) and the timepiece (10).

4. The adjustment method as claimed in claim 1, wherein the area (23') defined on the screen (23) of the portable object (20) is divided into a first, a second and a third portion (230, 231) such that the first and the second portion (230) are physically separated by the third portion (231), each portion sequentially displaying, independently from the other portions, black or white during the display sub-step, the timepiece (10) comprising two phototransistors (15') arranged at the case (10a), the first phototransistor being arranged so as to detect the sequence of the first portion, the second phototransistor being arranged so as to detect the sequence of the second portion.

5. The adjustment method as claimed in claim 4, wherein the black and white sequence of the first portion corresponds to a light coding of the time information, and the black and white sequence of the second portion corresponds to a clock signal allowing synchronous transmission.

6. The adjustment method as claimed in any of the preceding claims, wherein the step of testing the accuracy of the displayed time information comprises the following sub-steps:
- capturing, at a given instant, an image of the display means of the timepiece and an image of a piece of time information from an external source;
- processing the image of the display means of the timepiece by comparing the position of the display means with a series of reference points for detecting the displayed time information;
- comparing the detected time information with the image of the time information from the external source.

7. The adjustment method as claimed in any of the preceding claims, wherein the step of checking that the correct information is displayed comprises the following sub-steps:
- capturing, at a given instant, an image of the display means of the timepiece and an image of a piece of time information from an external source;
- processing the image of the display means of the timepiece by comparing the position of the display means with a series of reference points for detecting the displayed time information;
- comparing the detected time information with the image of the time information from the external source.

8. In another embodiment, the method further comprises a preliminary step of calibrating the timepiece comprising the following sub-steps:
- sending to the watch, via the communication circuit, a command for displaying a specified piece of time information;
- sending a command to the display means via the microcontroller so that the display means can display said specified time information.

9. The adjustment method as claimed in any of the preceding claims, wherein the portable object is a smartphone or a tablet computer.
